Europäisches Patentamt

European Patent Office

Office européen des brevets

(11) Publication number : **0 526 988 A2**

# (12) EUROPEAN PATENT APPLICATION

(21) Application number : 92306202.0

(22) Date of filing : 06.07.92

(51) Int. Cl.$^5$ : **C10G 49/04,** B01J 35/10, B01J 27/188

(30) Priority : **10.07.91 US 727732**

(43) Date of publication of application :
**10.02.93 Bulletin 93/06**

(84) Designated Contracting States :
**DE FR GB IT NL**

(71) Applicant : **TEXACO DEVELOPMENT CORPORATION**
**2000 Westchester Avenue**
**White Plains, New York 10650 (US)**

(72) Inventor : **Sherwood, David Edward Jr.**
**7613 9th Avenue**
**Port Arthur, TX 77642 (US)**
Inventor : **Petty, Randall Hughes**
**713 Herbert Woods Drive**
**Port Neches, TX 77651 (US)**
Inventor : **Martin, Bobby Ray**
**285 East Caldwood Drive**
**Beaumont, TX 77707 (US)**

(74) Representative : **Green, Mark Charles et al**
**Urquhart-Dykes & Lord, 91 Wimpole Street**
**London W1M 8AH (GB)**

(54) Hydrotreatment process employing a mono-modal catalyst with specified pore size distribution.

(57)    A process for the hydrotreatment of a sulfur- and metal-containing hydrocarbon feed which comprises contacting said feed with hydrogen and a catalyst in a manner such that the catalyst is maintained at isothermal conditions and is exposed to a uniform quality of feed, where said catalyst has a composition comprising about 1.0-6.0 wt. % of an oxide of a Group VIII metal, about 10.0-25.0 wt. % of an oxide of a Group VIB metal and about 1.0-6.0 wt. % of an oxide of phosphorus supported on a porous alumina support, and said catalyst is further characterized by having a specified pore diameter distribution where micropores with diameters of 100A-130A constitute 70.0-85.0% of the total pore volume, pores with diameters of greater than 160A constitute less than 7.5% of the total pore volume and macropores having diameters of greater than 250A constitute less than 4.0% of the total pore volume of the catalyst.

EP 0 526 988 A2

This invention relates to a process for hydrotreating/ hydrocracking a sulfur- and metal-containing hydrocarbon feedstock employing a catalyst composition which comprises a specified amount of a Group VIII metal, such as an oxide of nickel or cobalt, a specified amount of a Group VIB metal, such as an oxide of molybdenum or tungsten, and a specified amount of an oxide of phosphorus, such as phosphorus pentoxide supported on a porous alumina support. In the catalytic hydrotreatment process of this invention the sulfur- and metal-containing hydrocarbon feed is contacted with hydrogen and the catalyst, which has a specified pore size distribution, in a manner such that the catalyst is maintained at isothermal conditions and is exposed to a uniform quality of feed. The process of this invention is particularly effective in achieving the desired levels of hydrodesulfurization in the fraction of hydrotreated/hydrocracked petroleum resid product having a boiling point of less than 540°C.

Catalytic hydrotreatment processes utilized to treat hydrocarbon feedstocks, particularly petroleum residua, to achieve hydrodesulfurization (HDS), hydrodenitrogenation (HDN) and hydrodemetalization (HDM) (particularly including removal of nickel compounds (HDNi) and vanadium compounds (HDV)), is well known to those skilled in the art. A number of these processes employ hydrotreating catalysts with specified proportions or ranges of proportions of pores having relatively small diameters (i.e., micropores, herein defined as pores having diameters less than 250A) and pores having relatively large diameters (i.e., macropores, herein defined as pores having diameters greater than 250A).

Early petroleum distillate hydrotreating catalysts generally were monomodal catalysts with very small micropore diameters (less than 100A) and rather broad pore size distributions. First generation petroleum resid hydrotreating catalysts were developed by introducing a large amount of macroporosity into a distillate hydrotreating catalyst pore structure to overcome the diffusion resistance of large molecules. Such catalysts, which are considered fully bimodal HDS/HDM catalysts, are exemplified by U.S. Patent No. 4,089,774.

Another approach to developing improved catalysts for petroleum resid processing has involved enlarging the micropore diameter of essentially monomodal catalysts with no significant macroporosity to overcome the above-described diffusion limitations. Essentially monomodal catalysts with. small micropore diameters and low macroporosity designed for improved petroleum resid HDS include those disclosed by U.S. Patent Nos. 4,738,944; 4,729,826 (2nd zone(s)); 4,652,545; 4,500,424; 4,341,625; 4,309,278; 4,297,242; 4,066,574; 4,051,021; 4,048,060 (1st stage catalysts); 3,770,617; and 3,692,698. Essentially monomodal catalysts with larger micropore diameters and low macroporosity designed for improved petroleum resid HDM include those disclosed by U.S. Patent Nos. 4,729,826 (1st zone); 4,328,127; 4,309,278; 4,082,695; 4,048,060 (2nd stage catalyst); and 3,876,523.

Yet another approach to developing improved catalysts for petroleum resid processing has involved catalysts with pore diameters intermediate between the above-described monomodal HDS and HDM catalysts, as well as sufficient macroporosity so as to overcome the diffusion limitations for the hydrodesulfurization of the 540°C + bp unconverted resid product, but limited macroporosity to limit poisoning of the catalyst pellet interior. Hydrotreating/hydrocracking processes employing catalysts with intermediate micropore diameters and limited macroporosities include those disclosed in U.S. Patent No. 4,941,964.

None of the above-described catalyst types have been found effective for the removal of sulfur and nitrogen from hydroconverted petroleum distillates (i.e., the product of a hydroconverted petroleum resid having a boiling point less than 540°C ) while operating in the hydroconversion reactor or reactors where a vacuum resid feed, having at least 80 wt. %, preferably 90 wt. %, of components with boiling points greater than 540°C is partially converted (i.e., about 35-75%, preferably 50-60%) to a product with a boiling point less than 540°C.

It is one object of this invention to provide a process for the catalytic hydrotreatment of a sulfur- and metal-containing hydrocarbon feed, the process achieving improved levels of sulfur and nitrogen removal in the total product, while maintaining significant levels of hydroconversion of feed components with boiling points above 540°C to product boiling below 540°C. It is another object of this invention to provide a process for the catalytic hydrotreatment of a sulfur- and metal-containing hydrocarbon feed, the process achieving improved levels of HDS and HDN in the fraction of the hydrotreated/hydroconverted product having a boiling point less than 540°C.

It is one feature of the process of the instant invention that the catalyst employed has a specified micropore and macropore distribution such that micropores having diameters of 100-130A constitute 70.0-85.0% TPV, pores having a diameter of greater than 160A constitute less than 7.5% TPV, and that macropores of greater than 250A constitute less than 4.0% TPV of the catalyst. It is another feature of the process of the instant invention that the catalyst employed is contacted with the hydrocarbon feed and hydrogen in such a manner as to expose the catalyst to a uniform quality of feed, and to maintain the catalyst at isothermal temperatures.

It is one advantage of the process of the instant invention that improved HDS and HDN levels are achieved for both total hydrocarbon product and particularly for the portions of hydroconverted hydrocarbon product having a boiling point less than 540°C. It is another advantage of the process of the instant invention that levels of HDS and HDN remain consistently higher with increasing age of catalyst as compared with hydrotreatment

2

processes employing a conventional catalyst composition.

This invention is directed to a process for the catalytic hydrotreatment of a hydrocarbon feed, preferably a petroleum feedstock. Petroleum feedstocks which may be treated via the process of the instant invention include naphthas, distillates, gas oils, petroleum cokes, residual oils, and vacuum residua. A petroleum feedstock typical of those subject to catalytic hydrotreatment by the process of the instant invention is an Arabian Light/Arabian Medium, Vacuum Resid as set forth in Table I, below.

TABLE I

TYPICAL PETROLEUM FEEDSTOCK (ARABIAN

LIGHT/ARABIAN MEDIUM VACUUM RESID)

| | |
|---|---|
| GRAVITY, API | 6.9 |
| $1000^{\circ}$F+, vol. % | 89.3 |
| $1000^{\circ}$F+, wt. % | 90.1 |
| SULFUR, wt% | 4.61 |
| NITROGEN, wppm | 3650 |
| CARBON RESIDUE, wt. % | 20.0 |
| METALS, wppm | |
| Ni | 26 |
| V | 85 |
| Fe | 19 |
| Na | 12 |

The present invention relates to a process for the hydrotreatment of a sulfur- and metal-containing hydrocarbon feed which comprises contacting the feed with hydrogen and a catalyst in a manner such that the catalyst is maintained at isothermal conditions and is exposed to a uniform quality of feed where the catalyst has a composition comprising about 1.0-6.0, preferably about 2.5-3.5 wt. % of an oxide of a Group VIII metal, preferably nickel or cobalt, about 10.0-25.0, preferably about 12-18 wt. % of an oxide of a Group VIB metal, preferably tungsten or molybdenum, about 1.0-6.0, preferably about 1.5-3.0 wt. % of an oxide of phosphorus, preferably $P_2O_5$ all supported on a porous alumina support. The catalyst is further characterized by having a total surface area of 160-210 m²/g, preferably 165-185 m²/g, and a total pore volume of 0.50-0.65 cc/g, preferably 0.50-0.60 cc/g, with a pore diameter distribution such that micropores having diameters of 100-130A constitute 70.0-85.0 % of the total pore volume of the catalyst, pores having diameters greater than 160A constitute less than 7.5 %, preferably 1% to 7%, of the total pore volume of the catalyst and macropores having diameters greater than 250A constitute less than 4.0%, preferably 1.0 to 4.0 of the total pore volume of the catalyst.

The feed may be contacted with hydrogen and the catalyst by any means which insures that the catalyst is maintained at isothermal conditions and exposed to a uniform quality of feed. Preferred means for achieving such contact include contacting the feed with hydrogen and the prescribed catalyst in a single continuous-stirred-tank reactor or single ebullated-bed reactor, or in a series of 2-5 continuous-stirred-tank or ebullated-bed reactors, with ebullated-bed reactors being particularly preferred. The process of the instant invention is particularly effective in achieving desired levels of HDS in the fraction of hydrotreated/hydrocracked petroleum resid product having a boiling point less than 540°C.

The process of the instant invention employs a catalyst composition comprising about 1.0-6.0, preferably 2.5-3.5 wt. % of an oxide of a Group VIII metal, preferably nickel or cobalt, most preferably NiO, about 10.0-25.0, preferably about 12-18 wt. % of an oxide of a Group VIB metal, preferably tungsten or molybdenum, most preferably $MoO_3$ and about 1.0 to about 6.0, preferably 1.5 to 3.0 wt. % of an oxide of phosphorus, preferably $P_2O_5$, all supported on a porous alumina support, most preferably a gamma-alumina support. Group VIB and Group VIII as referred to herein are Group VIB and Group VIII of the Periodic Table of Elements. The Periodic Table of Elements referred to herein is found on the inside cover of the CRC Handbook of Chemistry and Physics, 55th Ed. (1974-75). Other oxide compounds which may be found in such a catalyst composition include $SiO_2$ (present in less than 2.5 wt. %), $SO_4$ (present in less than 0.8 wt. %), and $Na_2O$ (present in less than 0.1 wt. %). The above-described alumina support may be purchased or prepared by methods well known to those skilled in the art. Similarly, the support material may be impregnated with the requisite amounts of the above-described Group VIB and VIII metal oxides and phosphorus oxide via conventional means known to those skilled in the art.

A hydroconversion process which preferentially removes sulfur and nitrogen from the converted product stream with components having boiling points less than 540°C is desirable in those instances where there is less concern over the quality of the unconverted product stream, but, rather, where the primary concern is the quality of the distillate product from the hydroconversion process. It is well known to those skilled in the art that high heteroatom contents of distillate hydroconversion products have an adverse effect on fluid catalytic cracking of the heavier gas oils (having a boiling point of 345°C to about 540°C and that extensive hydrotreating of the distillate streams would be required to meet the strict mandated levels of heteroatoms in distillate fuels. The demands placed upon catalyst compositions make it difficult to employ a single catalyst in a hydroconversion process which will achieve effective levels of sulfur and nitrogen removal from the converted product stream having components with boiling points below 540°C. However, the catalyst employed in the process of the instant invention is capable of achieving such results as the prescribed catalyst has a sufficient micropore diameter to overcome the diffusion limitations for hydrotreatment of the converted product molecules but not so large nor containing macropores so as to allow poisoning of the catalyst pellet interiors. The catalyst also has a very narrow pore size distribution such that pores with diameters less than 100A are minimized as these pores are easily plugged with contaminants during hydroprocessing.

A second necessary and essential feature of the process of the instant invention is that the above-described catalyst must be contacted with the hydrocarbon feed in such a manner as to insure that the catalyst particles are maintained at isothermal conditions and exposed to a uniform quality of feed. Thus, process configurations such as fixed and moving catalyst bed arrangements are specifically precluded, as such reactor bed arrangements fail to insure the necessary isothermal conditions and exposure to a uniform quality of feed. Preferred means for achieving such isothermal conditions and exposure of catalyst to a uniform quality of feed include contacting the feed with catalyst in a single continuous-stirred-tank reactor (CSTR), a single ebullated-bed reactor, or in a series 2-5 CSTR's or ebullated-bed reactors, with ebullated-bed reactors being particularly preferred.

In one particular preferred embodiment of the process of the instant invention, a sulfur- and metal-containing hydrocarbon feedstock is catalyticalty hydrotreated with the above-described catalyst using the H-OIL Process configuration. H-OIL is a proprietary ebullated-bed process (co-owned by hydrocarbon Research, Inc. and Texaco Development Corp.) for the catalytic hydrogenation of residua and heavy oils to produce upgraded distillate petroleum products. The ebullated-bed system operates under essentially isothermal conditions and allows for exposure of catalyst particles to a uniform quality of feed.

It is well known to those skilled in the art that hydrotreatment of a sulfur- and metal-containing hydrocarbon feedstock such as vacuum resid typically yields a mixture of converted (i.e., hydroconverted or hydrocracked) liquid products which typically are upgraded distillate products with boiling points below 540°C and unconverted (i.e., non-hydroconverted or non-hydrocracked) material typically having a boiling point in excess of 540°C. Surprisingly, the process of the instant invention produces a very high degree of HDS and HDN for the hydrocracked (i.e., the distillate fraction) resulting from treatment of the hydrocarbon resid feedstock with this process.

Catalyst Examples A and B as described in Table II below are catalysts which may be employed in the process of this invention while Examples C and D are commercial catalysts typically used in hydrotreating petroleum residua.

EP 0 526 988 A2

TABLE II

CATALYST PROPERTIES

| | EXAMPLE A | EXAMPLE B | EXAMPLE* C | EXAMPLE* D |
|---|---|---|---|---|
| | NiMoP | CoMoP | NiMo | NiMo |
| Total Pore Volume (TPV), cc/g | 0.544 | 0.579 | 0.806 | 0.643 |
| PV >250 A, % TPV | 3.9 | 2.2 | 37.7 | 7.3 |
| PV >160 A, % TPV | 5.9 | 3.8 | NA | 16.3 |
| PV >130 A, % TPV | 9.2 | 14.6 | NA | 35.3 |
| PV >120 A, % TPV | 43.7 | 50.2 | NA | 62.8 |
| PV <160 A, % TPV | 94.2 | 96.2 | NA | 83.8 |
| PV <130 A, % TPV | 90.1 | 85.4 | NA | 64.7 |
| PV <100 A, % TPV | 12.8 | 11.2 | NA | 8.5 |
| PV, 100-160 A, % TPV | 81.4 | 85.0 | NA | 75.2 |
| PV, 100-130 A, % TPV | 78.1 | 74.2 | NA | 56.2 |
| Median Pore Diameter by Volume, A | 118 | 120 | NA | 126 |
| Median Pore Diameter by Surface Area, A | 117 | 118 | NA | 122 |
| Surface Area, $m^2$/g | 165 | 182 | 303 | 194 |
| Compacted Bulk Density, lb/ft$^3$ | 45.2 | NA | 36.5 | 39.7 |
| kg/m$^3$ | 724 | NA | 584 | 636 |

5

TABLE II

(Cont'd.)

| | | EXAMPLE A | EXAMPLE B | EXAMPLE C | EXAMPLE D |
|---|---|---|---|---|---|
| Chemical Properties (ACY Values) | | | | | |
| $MoO_3$ | wt. % | 15.2 | 15.2 | 13.5 | 15.2 |
| NiO | wt. % | 2.9 | --- | 3.6 | 3.2 |
| CoO | wt. % | --- | 3.3 | --- | --- |
| $SiO_2$ | wt. % | 1.6 | --- | 0.2 | 2.2 |
| $P_2O_5$ | wt. % | 1.7 | 1.5 | --- | --- |
| Mo Gradient | | 1.1 | 1.4 | --- | 3.1 |

Pore structure information determined using Micrometrics Autopore 9220 Mercury Porosimetry Instrument.

The process of this invention as well as hydrotreatment processes employing commercially available Catalyst C were evaluated in a single-stage ebullated-bed reactor under the following conditions:

TABLE III

| Condition | Range | Average (Nominal) |
|---|---|---|
| Temperature, °F | 778-781 | 779.5 |
| °C | 414-416 | 415.3 |
| LHSV. hr-1 | 0.24-0.29 | 0.27 |
| Total Pressure, psia | 2516-2500 | 2500 |
| kPa x $10^3$ | 17.35-17.23 | 17.23 |
| Hydrogen Inlet Partial Pressure, psig | 2305-2250 | 2250 |
| kPa x $10^{-3}$ (gauge) | 15.89-15.51 | 15.51 |
| Feed Gas Rate, scf/ barrel | 7076-8562 | 7800 |
| std $m^3/m^3$ | 1258-1522 | 1386 |
| Volume of Catalyst Loaded, cc | 1473-1489 | 1480 |

The ebullated-bed reactor evaluations were started up and the catalysts were aged at the constant conditions given in Table III, using the feedstock given in Table I, supra. These constant conditions produced a nomal 50-55 vol % conversion of components with boiling points greater than 540°C to a product with components with boiling points less than 540°C. After about 400 hours of operation, each catalyst achieved an age of about one barrel per pound and the following heteroatom contents for streams with various boiling ranges, as set out in Table IV which follows, were observed:

## TABLE IV

## CATALYST COMPARATIVE TEST RESULTS

Ebullated-Bed (One Stage) Bench Unit Data Obtained with Commercial Catalyst C (NiMo) and Catalyst A (NiMoP) Using Arabian Light/Medium Vacuum Resid (1) At Conditions Suitable for Hydrotreating/Hydro-cracking.

|  | Catalyst C | Catalyst A |
|---|---|---|
| **Sulfur, wt%** | | |
| 180°-340°C | 0.24 | 0.12 |
| 340°-540°C | 0.82 | 0.38 |
| 540°C + | 2.7 | 2.6 |
| **Total Nitrogen, wppm** | | |
| 180°-340°C | 673 | 257 |
| 340°-540°C | 1722 | 1169 |
| 540°C + | 3500 | 3175 |

(1) Sulfur in feed 4.61 %, nitrogen in feed 3650 wppm.

The data set out in Table IV show the surprising improvements in sulfur and nitrogen reduction in the various hydroconverted product streams achieved with Catalyst A when compared to the results obtained with commercial Catalyst C. In Table IV above, the data indicate the following for Catalyst A with regard to commercial Catalyst C:

| Cut | Sulfur | Nitrogen |
|---|---|---|
| 180°–340°C | 50% lower than Catalyst C | 62% lower than Catalyst C |
| 340°–540°C | 54% lower than Catalyst C | 32% lower than Catalyst C |
| 540°C + | About equal to Catalyst C | 9% lower than Catalyst C |

## Claims

1. A process for the hydroprocessing of a sulfur- and metal-containing hydrocarbon feed which comprises contacting said feed with hydrogen and a catalyst in a manner such that the catalyst is maintained at isothermal conditions and is exposed to a uniform quality of feed, characterised in that said catalyst has a composition comprising 1.0-6.0 weight percent of an oxide of a Group VIII metal, 10.0-25.0 weight percent of an oxide of a Group VIB metal and 1.0-6.0 weight percent of an oxide of phosphorus, all supported on a porous alumina support, said catalyst being further characterised by having a total surface area of 160-210 m²/g, a total pore volume of 0.50-0.65 cc/g, and a pore diameter distribution such that micropores having diameters of 100-130A constitute 70.0-85.0 percent of the total pore volume of the catalyst, micropores having diameters of greater than 160A constitute less than 7.5% of the total pore volume of the catalyst and macropores having diameters greater than 250A constitute less than 4.0% of the total pore volume of said catalyst.

2. A process as claimed in Claim 1, characterised in that said catalyst comprises 2.5-3.5 weight percent NiO, 12.0-18.0 weight percent $MoO_3$, and 1.5-3.0 weight percent of $P_2O_5$, supported on a porous alumina support.

3. A process as claimed in Claim 2, characterised in that said catalyst comprises 2.9 weight percent NiO, 15.2 weight percent $MoO_3$ and 1.7 weight percent $P_2O_5$.

4. A process as claimed in Claim 1, characterised in that said catalyst comprises 2.5 to 3.5 weight percent CoO, 12.0-18.0 weight percent $MoO_3$ and 1.0-2.5 weight percent $P_2O_5$ supported on a porous alumina support.

5. A process as claimed in any one of Claims 1 to 4, characterised in that said catalyst has a total surface area of 165-185 m²/g, a total pore volume of 0.50-0.60 cc/g, and a pore size distribution such that pores having diameters of 100-130A constitute 70.0-85.0 % of the total pore volume, pores having diameters greater than 160A constitute 1.0-6.0 % of the total pore volume, and pores having diameters of greater than 250A constitute 1.5 to 4.0 % of the total pore volume of said catalyst.

6. A process as claimed in any one of the preceding claims characterised in that said feed is contacted with said catalyst in a one or more continuous-stirred-tank reactors or one or more single ebullated-bed reactors.

7. A process as claimed in Claim 6, characterised in that said feed is contacted with said catalyst in a series of 2-5 ebullated-bed reactors or 2-5 continuous-stirred-tank reactors.

8. A process as claimed in any one of the preceding claims characterised in that said feed is contacted with said catalyst at operating conditions such that at least 35 vol. % of the feed components having boiling points more than 540°C are converted to products with boiling points less than 540°C.

9. A process as claimed in Claim 8 characterised in that said feed consists of at least 80 wt. % of components with boiling points greater than 540°C.

10. A catalyst characterised by a composition comprising 1.0-6.0 weight percent of an oxide of a Group VIII metal, 10.0-25.0 weight percent of an oxide of a Group VIB metal and 1.0-6.0 weight percent of an oxide of phosphorus, all supported on a porous alumina support, said catalyst being further characterised by having a total surface area of 160-210 $m^2/g$, a total pore volume of 0.50-0.65 cc/g, and a pore diameter distribution such that micropores having diameters of 100-130A constitute 70.0-85.0 percent of the total pore volume of the catalyst, micropores having diameters of greater than 160A constitute less than 7.5% of the total pore volume of the catalyst and macropores having diameters greater than 250A constitute less than 4.0% of the total pore volume of said catalyst.